# EUROPÄISCHE PATENTSCHRIFT

(11) **EP 1 534 055 B1**
(45) Veröffentlichungstag und Bekanntmachung des Hinweises auf die Patenterteilung: **29.10.2014**
(21) Anmeldenummer: 03026452.7
(22) Anmeldetag: 19.11.2003
(51) Int. Cl.: H05K 5/02, H05K 5/00

(54) **Gehaüse für ein elektrisches Bauteil**
Housing for an electrical device
Boîtier pour un dispositif électrique

(43) Veröffentlichungstag der Anmeldung: 25.05.2005
(73) Patentinhaber: GRUNDFOS A/S, DK-8850 Bjerringbro (DK)
(72) Erfinder: Jacobsen, Kjeld Vinther, 8900 Randers (DK)
(74) Vertreter: Hemmer, Arnd

(56) Entgegenhaltungen:
- DE-A- 4 133 260
- GB-A- 2 148 008
- JP-A- 61 226 626
- US-A- 4 766 520
- US-A- 4 866 989
- US-A- 6 099 324
- US-B1- 6 191 512

## Beschreibung

Die Erfindung betrifft einen Drucksensor.

In vielen technischen Bereichen werden elektrische oder elektronische Bauteile in einem Gehäuse angeordnet, um die Bauteile vor Umwelteinflüssen zu schützen, wobei elektrische Anschlüsse bzw. Anschlussleitungen aus dem Gehäuse herausgeführt werden müssen. So ist aus EP 1 353 160 A1 beispielsweise ein Drucksensor bekannt, bei welchem eine Leiterplatte, auf welcher das eigentliche Druckmesselement sowie weitere elektronische Bauteile angeordnet sind, im Inneren eines Kunststoffgehäuses angeordnet ist. Um diesen Sensor mit externen elektronischen Einrichtungen verbinden zu können, müssen an dem Gehäuse elektrische Anschlüsse vorgesehen sein oder eine elektrische Anschlussleitung aus dem Gehäuse herausgeführt werden. Dabei muss jedoch die Dichtigkeit des Gehäuses gewährleistet bleiben, um die im Inneren angeordneten elektronischen Bauteile beispielsweise vor Feuchtigkeit aus der Umgebung zu schützen.

US 4,866,989 offenbart einen Druckaufnehmer mit einem zweiteiligen Gehäuse, von welchem ein unteres Gehäuseteil ein Gewinde zum Einschrauben des Druckaufnehmers in eine Öffnung einer Maschine aufweist. An dieses erste Gehäuseteil ist eine Leiterplatte mit dem eigentlichen Druckmesselement angeordnet. Die Leiterplatte wird von einem zweiten Gehäuseteil umgeben, welches mit dem ersten Gehäuseteil verbunden wird. Mit dem zweiten Gehäuseteil sind ferner zwei Ausnehmungen ausgebildet, wobei sich durch eine Ausnehmung Anschlussstifte in einen Aufnahmeraum erstrecken. In diesen Aufnahmeraum kann ein Stecker eingreifen. In die zweite Öffnung des Gehäuses greift dabei eine Rastzunge des Steckers ein. Aufgrund der Öffnungen des Gehäuses lässt sich dieser Druckaufnehmer in feuchten Umgebungen nicht einsetzen, da die Feuchtigkeit im Inneren des Gehäuses zu Kurzschlüssen in den elektronischen Komponenten führen würde.

Es ist daher Aufgabe der Erfindung, einen Drucksensor mit einem Gehäuse zu schaffen, welches kostengünstig zu fertigen und leicht zu montieren ist sowie eine Verbindung des Drucksensors mit externen Elementen ermöglicht, ohne die Dichtigkeit des Gehäuses zu beeinträchtigen.

Diese Aufgabe wird durch einen Drucksensor mit den im Anspruch 1 angegebenen Merkmalen gelöst. Bevorzugte Ausführungsformen ergeben sich aus den Unteransprüchen.

Das Gehäuse des erfindungsgemäßen Drucksensors weist zumindest zwei Gehäuseteile auf, aus denen das Gehäuse zusammengesetzt wird. Im Inneren des Gehäuses wird ein elektrisches Bauteil angeordnet. Vorzugsweise wird das elektrische oder elektronische Bauteil zunächst in einem der Gehäuseteile angeordnet und das Gehäuse dann durch Zusammenfügen des ersten und des zweiten Gehäuseteiles geschlossen. Eines der Gehäuseteile kann somit als verschließbarer Deckel des Gehäuses dienen. Erfindungsgemäß weist das elektrische Bauteil zumindest einen Anschlussstift auf. Bei diesem Anschlussstift handelt es sich um einen elektrisch leitfähigen Kontakt, vorzugsweise um einen Metallstift, welcher einen Stecker zum Anschluss externer elektrischer Komponenten, insbesondere eines Anschlusskabels bildet. Alternativ kann auch ein Abschnitt der Leiterplatte durch die Dichtung an dem zweiten Gehäuseteil nach außen geführt sein, wobei eine elektrische Leiterbahn auf der Leiterplatte die Funktion des Anschlussstiftes übernimmt. Bevorzugt können an dem elektrischen Bauteil mehrere Anschlussstifte vorgesehen sein, abhängig davon, wie viele Kontakte für den elektrischen Anschluss erforderlich sind. Dies können beispielsweise Kontakte zur Stromversorgung und/oder zur Datenkommunikation mit dem elektrischen Bauteil sein. Der zumindest eine Anschlussstift erstreckt sich in der Fügerichtung der beiden Gehäuseteile. Die Fügerichtung ist dabei die Richtung, in der die beiden Gehäuseteile aufeinander zu bewegt werden, um die beiden Gehäuseteile zusammenzufügen. Der Anschlussstift erstreckt sich dabei durch eine an dem zweiten Gehäuseteil vorgesehene Ausnehmung bzw. durch eine in dieser angeordnete Dichtung aus dem Inneren des Gehäuses nach außen heraus. Dadurch, dass sich der Anschlussstift bzw. die Anschlussstifte in der Fügerichtung erstrecken, kann der Anschlussstift beim Zusammenfügen der beiden Gehäuseteile gleichzeitig durch die an dem zweiten Gehäuseteil vorgesehene Dichtung hindurchgeführt werden. Somit können das Schließen des Gehäuses und das Herausführen der elektrischen Anschlüsse in einem Arbeitsgang erfolgen. Die Dichtung kann einstückig mit dem zweiten Gehäuseteil ausgebildet sein, beispielsweise ist das gesamte zweite Gehäuseteil oder ein Teil von diesem aus einem geeigneten ausreichend elastischen Material gefertigt. Alternativ kann die Dichtung beispielsweise im Zweikomponenten-Spritzguss-Verfahren an das Gehäuseteil angegossen sein. Alternativ kann die Dichtung auch als separates Bauteil ausgebildet sein, welches an das zweite Gehäuseteil angesetzt wird, beispielsweise dort verklemmt oder verrastet wird.

Die vorangehend beschriebene Ausführungsform, bei welcher der Anschlussstift durch eine Dichtung am zweiten Gehäuseteil nach außen geführt ist, ist bevorzugt, da diese ermöglicht, den Anschlussstift an dem Gehäuse mit einem Standard-Anschlussstecker zu verbinden. Der Anschlussstecker muss keine zusätzliche Dichtung aufweisen, so dass hier auf allgemein am Markt erhältliche elektrische Anschlussstecker zurückgegriffen werden kann.

Das Gehäuse bildet das Gehäuse eines Drucksensors. Derartige Sensoren werden beispielsweise in Heizungsanlagen eingesetzt. Daher sind diese Bauteile häufig Feuchtigkeitseinflüssen ausgesetzt, so dass es erforderlich ist, das Innere des Gehäuses nach außen abzudichten, um die im Inneren angeordneten elektrischen bzw. elektronischen Bauteile vor Feuchtigkeit zu schützen. Ferner ist bei diesen Bauteilen, welche meist in großen Stückzahlen gefertigt werden, eine einfache Montage und kostengünstige Fertigung bevorzugt, wie sie durch das erfindungsgemäße Gehäuse ermöglicht wird.

Das elektrische Bauteil weist zumindest eine Leiterplatte auf, welche in einer Fügerichtung parallel zu ihrer Oberfläche in das erste Gehäuseteil eingesetzt ist. Auf der Leiterplatte können in bekannter Weise elektrische und/oder elektronische Bauteile angeordnet sein. Die Leiterplatte wird in ihrer Erstreckungsrichtung, d.h. in Richtung ihrer Oberfläche in das erste Gehäuseteil eingeschoben bzw. eingefügt. Dies ermöglicht, ein relativ flaches Gehäuse auszubilden, dessen Schmalseite zum Einschub der Leiterplatte geöffnet ist und vorzugsweise anschließend durch das zweite Gehäuseteil verschlossen wird. So wird die Öffnung des Gehäuses klein gehalten und insgesamt eine kompakte Ausgestaltung des Gehäuses ermöglicht.

Ferner erstreckt sich der zumindest eine Anschlussstift in einer Richtung parallel zur Oberfläche der Leiterplatte. Dies ermöglicht eine insgesamt flache Ausgestaltung, da der Anschlussstift bzw. die mehreren Anschlussstifte mit einem korrespondierendem Stecker bzw. mit einer korrespondierender Kupplung verbunden werden können, welche sich ebenfalls parallel zur Oberfläche der Leiterplatte erstreckt und in dieser Richtung auf den Anschlussstift aufgesteckt wird. Die Anordnung ist daher insgesamt wesentlich flacher als bei Anordnungen, bei welchen sich die Anschlussstifte normal zur Leiterplattenoberfläche erstrecken.

Die Fügerichtung der Gehäuseteile entspricht der Fügerichtung der Leiterplatte. Dies bedeutet, dass alle Elemente des Gehäuses einschließlich des elektrischen Bauteils im Inneren des Gehäuses in derselben Richtung bei der Montage zusammengefügt werden. Zunächst wird die Leiterplatte parallel zu ihrer Oberfläche, d.h. in Erstreckungsrichtung der Leiterplatte in das erste Gehäuseteil eingeschoben. Dabei erstreckt sich der zumindest eine Anschlussstift parallel zur Leiterplattenoberflächen in der Fügerichtung beim Einsetzen der Leiterplatte in das erste Gehäuseteil. Anschließend wird in derselben Fügerichtung das zweite Gehäuseteil auf das erste Gehäuseteil zu bewegt und so das zweite Gehäuseteil an das erste Gehäuseteil angefügt, um dieses zu verschließen. Dabei durchdringt der Anschlussstift die Dichtung an dem zweiten Gehäuseteil und bildet somit einen an der Außenseite des Gehäuses gelegenen Anschlussstift zur Verbindung beispielsweise mit einer elektrischen Anschlussleitung.

Eines der Gehäuseteile weist zumindest ein Führungselement auf, welches sich in Fügerichtung der Gehäuseteile zu dem anderen Gehäuseteil erstreckt und in zumindest eine korrespondierende Führung an dem anderen Gehäuseteil eingreift. Das Führungselement und die Führung, beispielsweise eine korrespondierende Nut, welche sich in Richtung des Führungselementes bzw. in Fügerichtung erstreckt, führen das erste und das zweite Gehäuseteil, wenn diese zusammengefügt werden. Auf diese Weise wird sichergestellt, dass das erste und zweite Gehäuseteil in einer bestimmten Fügerichtung zusammengesetzt werden und insbesondere in Richtung des zumindest einen Anschlussstiftes aufeinander zu bewegt werden. So wird sichergestellt, dass der Anschlussstift an einer vorgegebenen Position durch die Dichtung an dem zweiten Gehäuseteil tritt, und verhindert, dass der Anschlussstift beim Zusammenfügen der Gehäuseteile verbogen wird. Der Anschlussstift wird somit beim Zusammensetzen vor Beschädigungen geschützt, welche eine sichere Kontaktierung mit einem Stecker oder Kupplung beeinträchtigen könnten.

Dazu weist das Führungselement in der Fügerichtung eine derartige Länge auf, dass beim Zusammenfügen der Gehäuseteile das Führungselement in die Führung eingreift, bevor der Anschlussstift des zuvor in das erste Gehäuseteil eingesetzten elektrischen Bauteils in die Dichtung in dem zweiten Gehäuseteil eingreift. Dazu weisen die Führungselemente in der Fügerichtung beispielsweise eine Länge auf, welcher größer ist als die Länge des Teils des Anschlussstiftes, welcher sich ausgehend von der Dichtung im zusammengesetzten Zustand der Gehäuseteile nach außen erstreckt. Dadurch wird sichergestellt, dass beim Fügen zu dem Zeitpunkt, in dem der Anschlussstift mit der Dichtung in Kontakt kommt, bereits eine Führung durch das Führungselement und die korrespondierende Führung gegeben ist. Der Anschlussstift wird so in der vorgegebenen definierten Fügerichtung durch die Dichtung an dem zweiten Gehäuseteil hindurchgeführt.

An einem Gehäuseteil sind weiter bevorzugt zwei Führungselemente vorgesehen, welche sich ausgehend von Seitenkanten des Gehäuseteils in Fügerichtung entlang zweier einander entgegengesetzter Außenwandungen des anderen Gehäuseteils erstrecken, in welchen korrespondierende Führungen ausgebildet sind. Die Führungen können beispielsweise als Nuten an zwei einander entgegengesetzten Außenseiten des Gehäuseteils ausgebildet sein, so dass die Führungselemente in den Nuten an den Außenwandungen des Gehäuseteils geführt werden. Die Führungselemente des einen Gehäuseteils umgreifen somit seitlich die Wandungen des anderen Gehäuseteils. Auf diese Weise wird eine sichere und genaue Führung erreicht und ein Verkanten der Gehäuseteil beim Zusammenfügen verhindert. Vorzugsweise sind die Führungen so ausgebildet, dass die Führungselemente, wenn sie in den Führungen liegen, bündig mit den übrigen Außenseiten des Gehäuses abschließen, so dass insgesamt ein nach außen hin glattes Gehäuse geschaffen wird.

An einem der Gehäuseteile sind zweckmäßigerweise Rastzungen vorgesehen, welche zumindest eine Außenseite des anderen Gehäuseteils zumindest teilweise überdecken. Die Rastzungen treten mit korrespondierenden Rastelementen an dem anderen Gehäuseteil zur Verbindung der beiden Gehäuseteile in Eingriff.

Gemäß einer bevorzugten Ausführungsform weist eines der Gehäuseteile zumindest eine Entlüftungsöffnung auf, welche von einem Abschnitt des anderen Gehäuseteils und insbesondere von einer an dem anderen Gehäuseteil angebrachten Rastzunge oder einem an dem anderen Gehäuseteil angebrachten Führungselement an der Außenseite überdeckt ist. Eine solche Entlüftungsöffnung ist beispielsweise bei einem Drucksensor erforderlich, falls dieser einen Differenzdruck relativ zum Umgebungsdruck bestimmen soll. Darüber hinaus erleichtert die Entlüftungsöffnung das Zusammenfügen der beiden Gehäuseteile, da die dabei komprimierte Luft im Inneren des Gehäuses durch die Entlüftungsöffnung entweichen kann. Dadurch, dass die Entlüftungsöffnung von einem Teil des anderen Gehäuseteils an der Außenseite des Gehäuses überdeckt ist, wird die Entlüftungsöffnung nach Art einer Labyrinthdichtung vor Spritzwasser geschützt. Spritzwasser kann so nicht durch die Entlüftungsöffnung in das Innere des Gehäuses eindringen. Ein solcher Spritzwasserschutz ist insbesondere bei elektrischen Bauteilen, welche in feuchter Umgebung eingesetzt werden, wie es beispielsweise bei Heizungsanlagen der Fall ist, wichtig. Die Entlüftungsöffnung wird von einem Abschnitt des zweiten Gehäuseteils überdeckt. Dies kann beispielsweise ein am zweiten Gehäuseteil ausgebildeter Vorsprung sein, vorzugsweise jedoch wird die Entlüftungsöffnung von einem an dem anderen bzw. zweiten Gehäuseteil angebrachten Führungselement oder einer an dem anderen Gehäuseteil angebrachten Rastzunge überdeckt. Der Spritzwasserschutz wird dabei durch die ohnehin zum Zusammenfügen der beiden Gehäuseteile vorhandenen Rastzungen und Führungselemente sichergestellt, so dass keine zusätzlichen Bauteile erforderlich sind, um die Entlüftungsöffnung vor eindringendem Spritzwasser zu schützen. Darüber hinaus kann diese Anordnung der Entlüftungsöffnung bei jedem Gehäuse gemäß dem Oberbegriff des Anspruchs 1 vorgesehen werden, bei welchem Rastzungen oder Führungselement vorhanden sind, welche die Entlüftungsöffnung überdecken können. Diese Anordnung kann somit auch unabhängig von der zuvor beschriebenen Anordnung der Anschlussstifte verwirklicht werden.

Die Rastzungen erstrecken sich vorzugsweise ausgehend von einem der Gehäuseteile in Fügerichtung zu dem anderen Gehäuseteil und weisen an ihrem in Fügerichtung vorderen Ende Rastelemente auf, wobei die Entlüftungsöffnung von einem in Fügerichtung hinter den Rastelementen gelegenen Bereich der Rastzungen überdeckt wird. Die Rastelemente können beispielsweise Rasthaken oder Ausnehmungen sein, welche mit korrespondierenden Vorsprüngen bzw. Ausnehmungen an dem anderen Gehäuseteil rastend bzw. verriegelnd in Eingriff treten. Die Entlüftungsöffnung ist in dem Gehäuse dabei zwischen dem entsprechenden Rastelement und der dem anderen Gehäuseteil, d.h. dem Gehäuseteil mit der Rastzunge, zugewandten Seitenkante angeordnet. So wird erreicht, dass die Entlüftungsöffnung im zusammengefügten Zustand der Gehäuseteile vom in Fügerichtung mittleren Bereich der Rastzunge überdeckt wird. Im Bereich des vorderen Endes der Rastzunge wird der Spalt zwischen Rastzunge und den gegenüberliegendem Gehäuseteil über die Rastelemente verschlossen. Da diese formund kraftschlüssig aneinander anliegen, ist auch dieser Bereich zwischen Rastzunge und gegenüberliegender Gehäusewandung vor eindringendem Spritzwasser geschützt.

Besonders bevorzugt bildet die Rastzunge gleichzeitig ein Führungselement gemäß der vorangehenden Beschreibung. Beispielsweise greifen die Rastelemente des einen Gehäuseteils in Führungsnuten des anderen Gehäuseteils ein, so dass die Gehäuseteile beim Zusammenfügen in definierter Richtung, d.h. in Richtung der Führungen, geführt werden. Die Rastzungen können somit zwei Funktionen erfüllen, zum einen die Verriegelung zwischen den beiden Gehäuseteilen sicherstellen und zum anderen ein Zusammensetzen der Gehäuseteile in einer definierten Fügerichtung gewährleisten.

Die Dichtung an dem zweiten Gehäuseteil ist vorzugsweise einstückig mit einer Dichtung zur Abdichtung eines Spaltes zwischen den beiden Gehäuseteilen ausgebildet. Eine solche Dichtung kann als separates Dichtungselement zwischen dem ersten und dem zweiten Gehäuseteil angeordnet werden oder einstückig mit dem zweiten Gehäuseteil ausgebildet sein. Besonders bevorzugt ist die Dichtung im Zweikomponenten-Spritzguss-Verfahren an das zweite Gehäuseteil angegossen. In dem zweiten Gehäuseteil ist eine entsprechende Ausnehmung ausgebildet, welche lediglich von der Dichtung verschlossen wird, durch welche dann im Bereich dieser Ausnehmung die Anschlussstifte nach außen aus dem Gehäuse herausgeführt werden.

Dazu ist in der Dichtung zumindest ein Durchgangsloch zur Aufnahme des Anschlussstifts ausgebildet oder die Dichtung wird von dem Anschlussstift durchstochen. Wenn ein Durchgangsloch vorgesehen ist, ist dieses in seinem Querschnitt vorzugsweise kleiner als der Querschnitt des Anschlussstiftes ausgebildet, so dass sichergestellt ist, dass die Dichtung am gesamten Umfang des Anschlussstiftes dichtend zur Anlage kommt. Zum besseren Einführen des Anschlussstiftes in die Dichtung beim Zusammenfügen der Gehäuseteile, kann das Durchgangsloch an der der Gehäuseinnenseite zugewandten Seite der Dichtung konisch erweitert sein. So werden Fasen gebildet, welche den Anschlussstift in das zugehörige Durchgangsloch führen. Alternativ kann die Dichtung auch zumindest jeweils an der Stelle, an der ein Anschlussstift durch sie hindurchgeführt werden soll, so dünn ausgebildet werden, dass sie von dem Anschlussstift durchstochen werden kann. So kann auf die Ausbildung von Durchgangslöchern in der Dichtung verzichtet werden und es können größere Lagetoleranzen der Anschlussstifte ausgeglichen werden. Auch bei dieser Ausführungsform können an der Innenseite der Dichtung konische Vertiefungen zum Einführen der Anschlussstifte in die Dichtung ausgebildet sein.

Gemäß einer bevorzugten Ausführungsform ist die Dichtung, durch welche sich zumindest ein Anschlussstift erstreckt, gegenüber der Außenfläche des zweiten Gehäuseteils um ein Maß zurückversetzt, welches größer oder gleich dem Maß ist, um welches der Anschlussstift aus der Dichtung nach außen hervorragt. Im zusammengesetzten Zustand der Gehäuseteile sind der Anschlussstift bzw. die Anschlussstifte somit in einer Vertiefung an der Außenseite des Gehäuses angeordnet, so dass die Anschlussstifte nicht über die Außenseite des Gehäuses hervorragen. So sind die Anschlussstifte vor Beschädigungen geschützt. Darüber hinaus kann die Vertiefung gleichzeitig als Steckkupplung dienen, welche in ihrer Form an einen aufzunehmenden Anschlussstecker beispielsweise einer elektrischen Anschlussleitung angepasst ist. Dazu können im Inneren der Vertiefung parallel zu dem Anschlussstift eine Profilierung bzw. Führungsnuten ausgebildet sein. Diese sind vorzugsweise derart asymmetrisch ausgebildet, dass der Stecker lediglich in einer definierten Position eingesteckt werden kann, so dass eine falsche Kontaktierung der Anschlussstifte ausgeschlossen ist. Um zu vermeiden, dass sich Feuchtigkeit in der Vertiefung mit den Anschlussstiften sammelt, kann am Boden dieser Vertiefung eine Abflussöffnung vorgesehen sein, welche zur Außenseite des Gehäuses geöffnet ist und durch welche sich in der Vertiefung sammelndes Wasser nach außen abfließen kann. Um dies zu erleichtern, kann der Boden der Vertiefung, d.h. die Dichtung zu der Abflussöffnung hin geneigt sein.

Nachfolgend wird die Erfindung beispielhaft anhand der beigefügten Figuren beschrieben. In diesen zeigt:
- Fig. 1: eine Explosionsansicht des Gehäuses im zerlegten Zustand,
- Fig. 2: eine Explosionsansicht des Gehäuses gemäß Fig. 1 aus einer zweiten Perspektive,
- Fig.3: eine teilweise geschnittene Ansicht des Gehäuses gemäß Fig. 1 und 2 im zusammengesetzten Zustand und
- Fig. 4: eine Schnittansicht des zusammengesetzten Gehäuses gemäß Fig. 3.

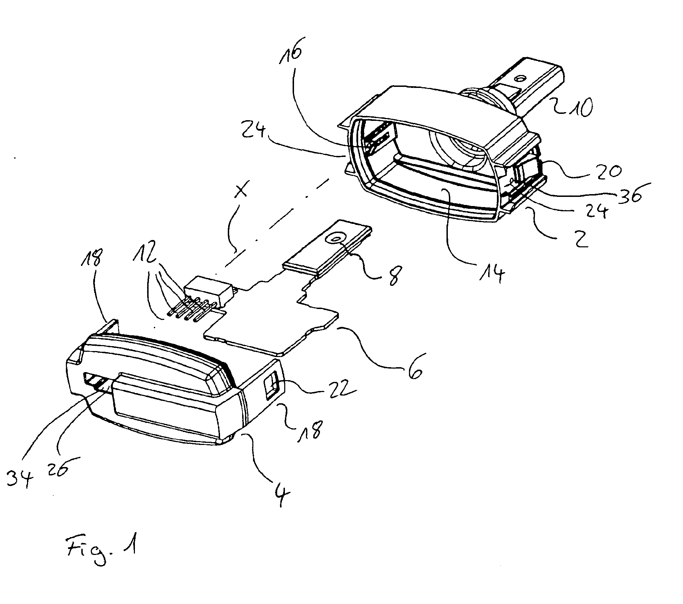

Bei dem anhand von Figuren 1 bis 4 beschriebenen Gehäuse handelt es sich um ein Gehäuse für einen Drucksensor, wie er beispielsweise aus EP 1 353 160 A1 bekannt ist. Fig. 1 zeigt das Gehäuse mit dem elektrischen Bauteil im zerlegten Zustand. Das Gehäuse besteht im Wesentlichen aus zwei Gehäuseteilen 2 und 4, welche jeweils einstückig als Spritzgussteile aus Kunststoff ausgebildet sind. Das erste Gehäuseteil 2 bildet dabei ein Gehäuseunterteil, während das zweite Gehäuseteil 4 einen Deckel zum Verschluss des Gehäuseunterteils 2 bildet. Im Inneren des Gehäuses ist eine Leiterplatte 6 angeordnet, auf welcher elektrischen bzw. elektronischen Bauteile in bekannter Weise angeordnet sind. Insbesondere weist die Leiterplatte einen länglichen Fortsatz mit einem Druckmesselement 8 auf, welcher im zusammengesetzten Zustand in einen Vorsprung des Gehäuseunterteils 2 eingreift, welcher einen Messfühler 10 bildet, wie aus EP 1 353 160 A1 bekannt ist. An der Leiterplatte 6 sind elektrische Anschlüsse in Form von Anschlussstiften 12 angebracht, welche dazu dienen, die elektrischen bzw. elektronischen Bauteile auf der Leiterplatte 6 mit externen elektrischen Komponenten, beispielsweise einer Stromversorgung und Steuereinrichtung zu verbinden. Die Anschlussstifte 12 bilden elektrisch leitende Kontakte, welche an ihrem einen Ende mit entsprechenden Leiterbahnen auf der Leiterplatte 6 in Verbindung stehen. Ausgehend von den mit der Leiterplatte in Verbindung stehenden Enden erstrecken sich die Anschlussstifte parallel zur Oberfläche der Leiterplatte 6 und parallel zueinander von einer Kante der Leiterplatte weg. Dabei sind die freien Enden der Anschlussstifte 12 dem Deckel 4 zugewandt. Die Anschlussstifte 12 erstrecken sich parallel zur Fügerichtung X, in welcher die Leiterplatte 6 in das Gehäuseunterteil 2 eingesetzt und der Deckel 4 an das Gehäuseunterteil 2 angesetzt wird.

Bei der Montage wird zunächst die Leiterplatte 6 in der Fügerichtung X in das Gehäuseunterteil 2 eingesetzt. Dazu sind im Inneren eines Aufnahmeraumes 14 im Inneren des Gehäuseunterteils 2 an zwei einander gegenüberliegenden Wandungen Aufnahmenuten 16 ausgebildet, in welche zwei Seitenkanten der Leiterplatte 6 eingreifen. Die Aufnahmenuten 16 erstrecken sich ebenfalls parallel zur Fügerichtung X. Die Aufnahmenuten 16 weisen an ihrer der Öffnung des Gehäuseunterteils 2 zugewandten Seite Fügefasen auf, um das Einsetzen der Leiterplatte 6 zu erleichtern. Die Aufnahmenuten 16 halten die Leiterplatte möglichst spielfrei im Inneren des Gehäuseunterteils. Die Leiterplatte 6 wird wie beschrieben in ihrer Längsrichtung in das Gehäuse eingeschoben, so dass das Gehäuse flach und die durch den Deckel 4 zu verschließende Öffnung klein ausgebildet werden kann.

Nach dem Einsetzen der Leiterplatte 6 wird der Deckel 4 in der Fügerichtung X an das Gehäuseunterteil 2 angesetzt. Der Deckel 4 weist an zwei Querseiten jeweils Rastzungen 18 auf, welche verriegelnd mit Rastvorsprüngen 20 an zwei Außenseiten des Gehäuseunterteils 2 in Eingriff treten können. Dazu weisen die Rastzungen 18 an ihrem in Fügerichtung X vorderen freien Ende Ausnehmungen 22 auf, in welche die Rastvorsprünge 20 eingreifen können. Die Rastzungen 18 sind ausreichend elastisch ausgebildet, so dass sie nach außen ausgelenkt werden können, um über die Rastvorsprünge 20 hinwegbewegt zu werden, bis die Rastvorsprünge 20 in die Ausnehmungen 22 eintreten können. Um die Auslenkung zu erleichtern, weisen die Rastvorsprünge 20 in Fügerichtung entsprechende Fasen auf.

Die Rastzungen 18 dienen neben der Verriegelung des ersten und zweiten Gehäuseteils 2, 4 auch zur Führung der beiden Gehäuseteile 2, 4 beim Zusammenfügen. Die Rastzungen 18 umgreifen zwei einander entgegengesetzte Außenseiten des Gehäuseunterteils 2. An diesen Außenseiten sind jeweils Führungsnuten 24 ausgebildet, in deren Inneren die Rastvorsprünge 20 angeordnet sind. Dabei weisen die Führungsnuten 24 eine Breite auf, welche der Breite der Rastzungen 18 entspricht. Wenn die Rastzungen 18 in die Führungsnuten 24 eingreifen, werden die beiden Gehäuseteile 2 und 4 somit so zueinander geführt, dass sie nur parallel zu der Fügerichtung X aufeinander zu bewegt werden können. Die Rastzungen 18 sind in Richtung der Fügerichtung X so lang ausgebildet, dass sie in die Führungsnuten 24 eingreifen, bevor die Anschlussstifte 12 mit dem Deckel 4 in Kontakt kommen. Somit wird beim Zusammensetzten von Deckel 4 und Gehäuseunterteil 2 eine genaue Führung sichergestellt, bevor die Anschlussstifte 12 durch den Deckel 4 geführt werden. Eine Beschädigung der Anschlussstifte durch Verkanten des Deckels 4 beim Zusammensetzen kann so vermieden werden.

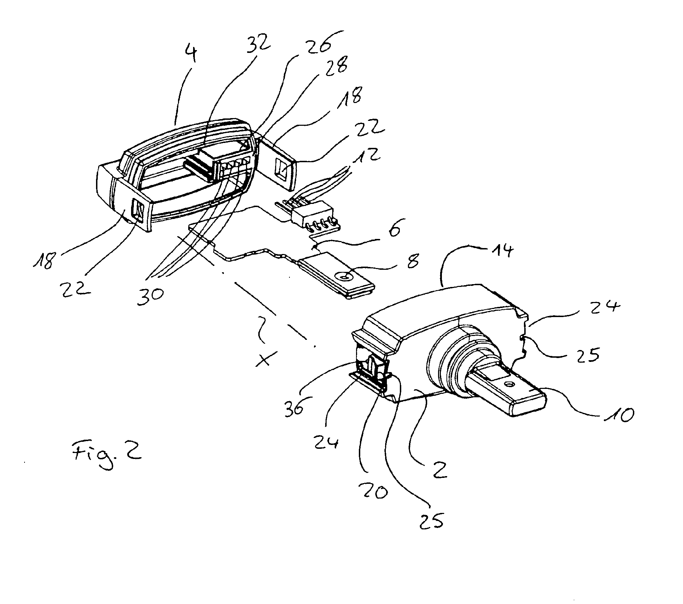

Der Eingriff der Anschlussstifte 12 in den Deckel 4 wird näher anhand von Fig. 2 beschrieben, welcher eine Ansicht des Gehäuses gemäß Fig. 1 von der Seite des Gehäuseunterteils 2 her gesehen zeigt. In dem Deckel 4 ist eine zur Außenseite des Deckels bzw. des Gehäuses hin geöffnete Ausnehmung 26 ausgebildet. Diese Ausnehmung 26 ist von einer Dichtung 28 an der dem Aufnahmeraum 14 des Gehäuseunterteils 2 zugewandten Seite verschlossen. In der Dichtung 28 sind korrespondierend zu den Anschlussstiften 12 Durchgangsöffnungen 30 ausgebildet, welche sich zu der dem Gehäuseunterteil 2 zugewandten Seite hin erweitern. Beim Aufsetzten des Deckels 4 auf das Gehäuseunterteil 2 treten die freien Enden der Anschlussstifte 12 in die Durchgangsöffnungen 30 ein und werden in diesen durch die Dichtung 26 aus dem Gehäuse nach außen geführt, um an der Außenseite des Deckels 4 einen Anschlussstecker zu bilden. Dabei liegt die Dichtung 28 im Bereich der Durchgangsöffnungen 30 dichtend am Außenumfang der Anschlussstifte 12 an. Beim Zusammensetzten des Gehäuses kann somit eine einfach zu montierende und dichte Durchführung der elektrischen Anschlüsse aus dem Inneren des Gehäuses nach außen geschaffen werden. Wie oben beschrieben, sind die Rastzungen 18 so lang, dass sie bereits in die Führungsnuten 24 eingreifen, bevor die Anschlussstifte 12 mit ihren freien Enden in die Durchgangsöffnungen 30 eintreten. So wird sichergestellt, dass die Anschlussstifte 12 definiert und in einer Richtung parallel zur Fügeachse X in die Durchgangsöffnungen 30 eintreten.

Die Dichtung 28 ist einteilig mit der Dichtung 32 am Umfang des Deckels 4 ausgebildet. Die Dichtung 32 dient zur Abdichtung des Deckels 4 gegenüber dem Gehäuseunterteil 2, wenn diese zusammengefügt sind. Die Dichtung 28 und die Dichtung 32 sind im Zweikomponenten-Spritzguss-Verfahren an den Deckel 4 angegossen. Darüber hinaus verfügt die Dichtung 32 über einen Bereich, der in Fügerichtung X mit der Platine bzw. Leiterplatte 6 zur Anlage kommt, um die Leiterplatte 6 elastisch in dem Gehäuse zu fixieren.

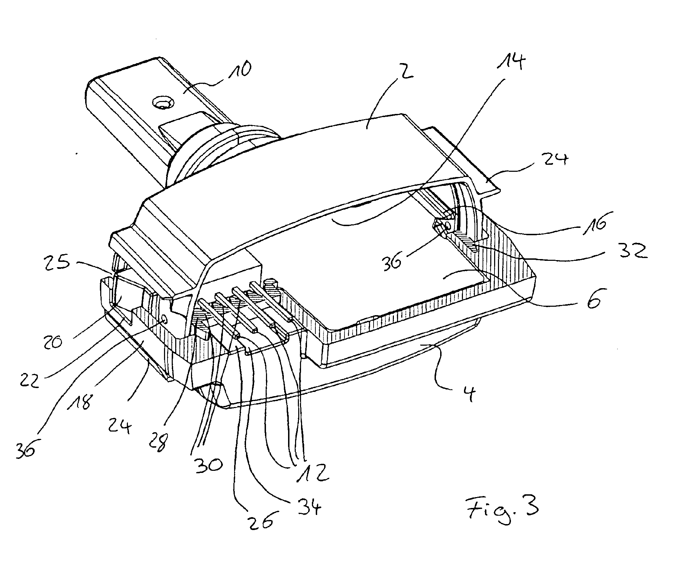

Fig. 3 zeigt das Gehäuse bestehend aus Gehäuseunterteil 2 und Deckel 4 im zusammengesetzten Zustand, wobei der Deckel 4 teilweise geschnitten dargestellt ist. Die Leiterplatte 6 ist in den Aufnahmenuten 16 im Inneren des Gehäuseunterteils 2 gehalten. Der Deckel 4 ist dicht an die Öffnung des Gehäuseunterteils 2 angesetzt, wobei die Dichtung 32 am Umfang des Gehäuseunterteils 2 dichtend zur Anlage kommt. Die Rastzungen 18 liegen in den Führungsnuten 24 und sind mit den Rastvorsprüngen 20 im Eingriff, d.h. die Rastvorsprünge 20 greifen in die Ausnehmungen 22 der Rastzungen 18 ein und halten somit den Deckel 4 fest an dem Gehäuseunterteil 2. Die Anschlussstifte 12 erstrecken sich durch die Durchgangsöffnungen 30 in der Dichtung 28 aus dem Gehäuse nach außen. Dabei sind die Anschlussstifte 12 im Inneren der Ausnehmung 26 angeordnet, welche somit einen Aufnahmeraum für einen Anschlussstecker bildet. Im Inneren der Ausnehmung 26 sind die Anschlussstifte 12 vor Beschädigungen geschützt. Dazu weist die Ausnehmung 26 in Erstreckungsrichtung der Anschlussstifte 12 eine größere Länge als die im Inneren der Ausnehmung 26 angeordneten Anschlussstifte 12 auf. Die Anschlussstifte 12 erstrecken sich somit nicht aus der Ausnehmung 26 heraus. In der Ausnehmung 26 ist eine Nut 34 ausgebildet, welche sich parallel zu den Anschlussstiften 12 erstreckt. Diese bildet im Inneren der Ausnehmung 26 normal zur Fügerichtung X eine profilierte Querschnittsfläche, welche dem Querschnitt eines in Fügerichtung X aufzunehmenden Steckers entspricht. Da die Nut 34 nur an einer Seite der Ausnehmung 26 angeordnet ist, wird eine asymmetrische Form des Querschnittes geschaffen, welche verhindert, dass ein korrespondierend ausgebildeter Anschlussstecker verkehrt herum in die Ausnehmung 26 eingesetzt werden kann.

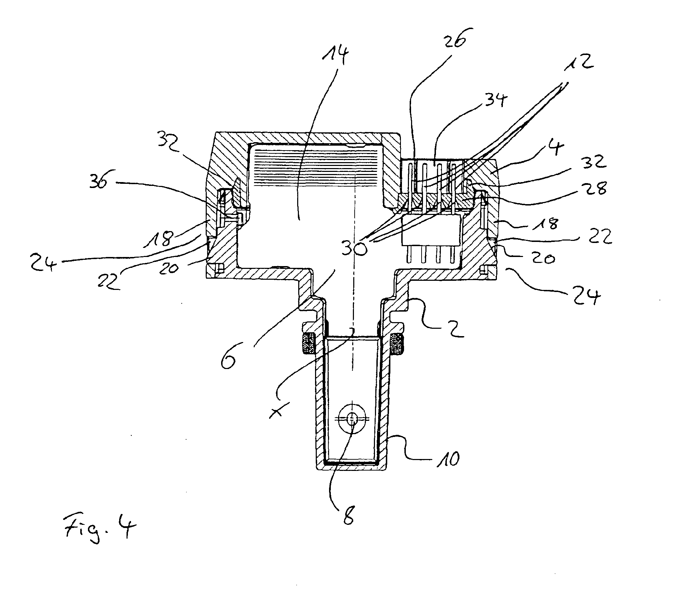

Fig. 4 zeigt eine Schnittansicht des in Fig. 3 gezeigten montierten Gehäuses. Anhand von Fig. 4 wird ein weiteres Merkmal der Erfindung beschrieben. In dem Gehäuseunterteil 2 ist im Bereich der Führungsnuten 24 jeweils eine Entlüftungsöffnung 36 (siehe auch Figuren 1 bis 3) ausgebildet. Die Entlüftungsöffnung 36 verbindet den Aufnahmeraum 14 im Inneren des Gehäuses bzw. des Gehäuseunterteils 2 mit der Gehäuseaußenseite im Bereich der Führungsnuten 24. Dabei liegen die Entlüftungsöffnungen 36 in den Führungsnuten zwischen den Rastvorsprüngen 20 und der dem Deckel 4 zugewandten Kante des Gehäuseunterteils 2. An dieser Position werden die Entlüftungsöffnungen 36 von den Rastzungen 18 überdeckt, wenn der Deckel 4 an das Gehäuseunterteil 2 angesetzt ist. Die Rastzungen 18 sind dazu im Bereich der Entlüftungsöffnungen 36 von den gegenüberliegenden Außenwandungen des Gehäuseunterteils 2 beabstandet, so dass eine Entlüftung des Gehäuseinnenraumes durch die Entlüftungsöffnungen 36 und die Spalte zwischen Rastzungen 18 und den Außenseiten des Gehäuseunterteils 2 im Bereich der Führungsnuten 24 möglich ist. Gleichzeitig bilden die Rastzungen 18 über den Entlüftungsöffnungen 36 nach Art einer Labyrinthdichtung einen ausreichenden Spritzwasserschutz, so dass der Gehäuseinnenraum vor eindringender Feuchtigkeit geschützt ist. Dabei ist der Spalt zwischen den Rastzungen 18 und der Außenseite des Gehäuseunterteiles 2 insbesondere an der dem Deckel 4 abgewandten Seite des Gehäuseunterteils 2 durch die Rastvorsprünge 20 verschlossen, welche in den Ausnehmungen 22 an den Rastzungen 18 anliegen. Eine Entlüftung findet nicht nur durch die verbleibenden seitlichen Spalte zwischen Rastzungen 18 und Führungsnuten 24, sondern auch durch Öffnungen 25 in der dem Deckel 4 abgewandten Unterseite des Gehäuseteils 2 statt, wobei durch die Spalte und Öffnungen 25 Spritzwasser nicht direkt in den Aufnahmeraum 14 im Inneren des Gehäuses eindringen kann.

### Bezugszeichenliste

- 2 -: Erstes Gehäuseteil, Gehäuseunterteil
- 4 -: Zweites Gehäuseteil, Deckel
- 6 -: Leiterplatte
- 8 -: Druckmesselement
- 10 -: Messfühler
- 12 -: Anschlussstifte
- 14 -: Aufnahmeraum
- 16 -: Aufnahmenuten
- 18 -: Rastzungen
- 20 -: Rastvorsprünge
- 22 -: Ausnehmungen
- 24 -: Führungsnuten
- 25 -: Öffnung
- 26 -: Ausnehmung
- 28 -: Dichtung
- 30 -: Durchgangsöffnungen
- 32 -: Dichtung
- 34 -: Nut
- 36 -: Entlüftungsöffnungen

- X -: Fügerichtung

## Patentansprüche

1. Drucksensor mit einem Gehäuse, aufweisend ein erstes Gehäuseteil (2) sowie ein zweites Gehäuseteil (4), und einem im Inneren (14) des Gehäuses angeordneten elektrischen Bauteil mit einer Leiterplatte (6), wobei die Leiterplatte (6) ein an dieser angeordnetes Druckmesselement und zumindest einen Anschlussstift (12) aufweist, welcher sich in einer Richtung parallel zur Oberfläche der Leiterplatte (6) erstreckt, **dadurch gekennzeichnet, dass** sich der zumindest eine Anschlussstift (12) in derselben Fügerichtung (X), in welcher die beiden Gehäuseteile (2, 4) sowie die Leiterplatte (6) zusammengesetzt werden, durch eine Ausnehmung (26) in dem zweiten Gehäuseteil (4) nach außen erstreckt, wobei in der Ausnehmung (26) an dem zweiten Gehäuseteil (4) eine Dichtung (28) vorgesehen ist, durch welche sich der Anschlussstift (12) nach außen erstreckt, und
eines der Gehäuseteile (4) zumindest ein Führungselement (18) aufweist, welches sich in Fügerichtung (X) der Gehäuseteile (2, 4) zu dem anderen Gehäuseteil (2) erstreckt und in zumindest eine korrespondierende Führung (24) an dem anderen Gehäuseteil (2) eingreift,
wobei das Führungselement (18) in der Fügerichtung (X) eine derartige Länge aufweist, dass beim Zusammenfügen der Gehäuseteile (2, 4) das Führungselement (18) in die Führung (24) eingreift, bevor der Anschlussstift (12) des zuvor in das erste Gehäuseteil (2) eingesetzten elektrischen Bauteils (6) in die Dichtung (28) in dem zweiten Gehäuseteil (4) eingreift.

2. Drucksensor nach Anspruch 1, **dadurch gekennzeichnet, dass** an einem Gehäuseteil (4) zwei Führungselemente (18) vorgesehen sind, welche sich ausgehend von zwei Seitenkanten des Gehäuseteils (4) in Fügerichtung (X) entlang zweier einander entgegengesetzter Außenwandungen des anderen Gehäuseteils (2) erstrecken, in welchen korrespondierende Führungen (24) ausgebildet sind.

3. Drucksensor nach einem der vorangehenden Ansprüche, **dadurch gekennzeichnet, dass** an einem der Gehäuseseile (4) Rastzungen (18) vorgesehen sind, welche zumindest eine Außenseite des anderen Gehäuseteils (2) zumindest teilweise überdecken.

4. Drucksensor nach einem der vorangehenden Ansprüche, **dadurch gekennzeichnet, dass** eines der Gehäuseteile (2) zumindest eine Entlüftungsöffnung (26) aufweist, welche von einem Abschnitt des anderen Gehäuseteils (4), insbesondere von einer an dem anderen Gehäuseteil (4) angebrachten Rastzunge (18) oder einem an dem anderen Gehäuseteil (4) angebrachten Führungselement (18) an der Außenseite überdeckt ist.

5. Drucksensor nach Anspruch 3 und 4, **dadurch gekennzeichnet, dass** sich die Rastzungen (18) ausgehend von einem der Gehäuseteile (4) in Fügerichtung (X) zu dem anderen Gehäuseteil (2) erstrecken und an ihrem in Fügerichtung (X) vorderen Ende Rastelemente (22) aufweisen, wobei die Entlüftungsöffnung (36) von einem in Fügerichtung hinter den Rastelementen (22) gelegenen Bereich der Rastzunge (18) überdeckt wird.

6. Drucksensor nach einem der Ansprüche 3 bis 5, **dadurch gekennzeichnet, dass** die Rastzunge (18) gleichzeitig ein Führungselement gemäß einem der Ansprüche 6 bis 8 bildet.

7. Drucksensor nach einem der vorangehenden Ansprüche, **dadurch gekennzeichnet, dass** die Dichtung (28) an dem zweiten Gehäuseteil (4) einstückig mit einer Dichtung (32) zur Abdichtung eines Spaltes zwischen den beiden Gehäuseteilen (2, 4) ausgebildet ist.

8. Drucksensor nach einem der vorangehenden Ansprüche, **dadurch gekennzeichnet, dass** in der Dichtung (28) zumindest ein Durchgangsloch (30) zur Aufnahme des Anschlussstiftes (12) ausgebildet ist oder die Dichtung (28) von dem Anschlussstift (12) durchstochen ist.

9. Drucksensor nach einem der vorangehenden Ansprüche, **dadurch gekennzeichnet, dass** die Dichtung (28), durch welche sich der Anschlussstift erstreckt, gegenüber der Außenfläche des zweiten Gehäuseteils (4) um ein Maß zurückversetzt ist, welches größer oder gleich dem Maß ist, um welches der Anschlussstift (12) aus der Dichtung (28) nach außen hervorragt.

## Claims

1. A pressure sensor with a housing, comprising a first housing part (2) as well as a second housing part (4), and with an electrical component which is arranged in the inside (14) of the housing and with a circuit board (6), wherein the circuit board (6) comprises a pressure measurement element arranged on this and at least one connection pin (12) extending in a direction parallel to the surface of the circuit board (6), **characterised in that**
the at least one connection pin (12) extends outward through a recess (26) in the second housing part (4) in the same joining direction (X), in which the two housing parts (2, 4) as well as the circuit board (6) are put together, wherein a seal (28) through which the connection pin (12) extends outwards is provided in the recess (26) on the second housing part (4), and
one of the housing parts (4) comprises at least one guide element (18) which extends in the joining direction (X) of the housing parts (2, 4) to the other housing part (2) and engages into at least one corresponding guide (24) on the other housing part (2),
wherein the guide element (18) in the joining direction (X) has such a length that on joining the housing parts (2, 4) together, the guide element (8) engages into the guide (24) before the connection pin (12) of the electrical component (6) previously inserted into the first housing part (2) engages intro the seal (28) in the second housing part (4).

2. A pressure sensor according to claim 1, **characterised in that** two guide elements (18) which departing from two side edges of the housing part (4) extend in the joining direction (X) along two outer walls of the other housing part (2) which are opposite one another and in which corresponding guides (24) are formed, are provided on a housing part (4).

3. A pressure sensor according to one of the preceding claims, **characterised in that** detent tongues (18) which at least partly cover an outer side of the other housing part (2) are provided on one of the housing parts (4).

4. A pressure sensor according to one of the preceding claims, **characterised in that** one of the housing parts (2) comprises at least one bleed opening (26), which on the outer side is covered by a section of the other housing part (4), in particular by a detent tongue (18) attached on the other housing part (4) or by a guide element (18) attached on the other housing part (4).

5. A pressure sensor according to claim 3 and 4, **characterised in that** the detent tongues (18) departing from one of the housing parts (4) extend in the joining direction (X) to the other housing part (2) and at their end which is at the front in the joining direction (X) comprise detent elements (22), wherein the bleed opening (36) is covered by a region of the detent tongue (18) which is situated behind the detent elements (22) in the joining direction.

6. A pressure sensor according to one of the claims 3 to 5, **characterised in that** the detent tongue (18) simultaneously forms a guide element according to one of the claims 6 to 8.

7. A pressure sensor according to one of the preceding claims, **characterised in that** the seal (28) on the second housing part (4) is formed as one piece with a seal (32) for sealing a gap between the two housing parts (2, 4).

8. A pressure sensor according to one of the preceding claims, **characterised in that** at least one through-hole (30) for receiving the connection pin (12) is formed in the seal (28) or the seal (28) is pierced by the connection pin (12).

9. A pressure sensor according to one of the preceding claims, **characterised in that** the seal (28), through which the connection pin extends, is set back with respect to the outer surface of the second housing part (4) by an amount which is greater or equal to the amount by which the connection pin (12) projects outwards out of the seal (28).

## Revendications

1. Capteur de pression muni d'un boîtier, comprenant une première partie de boîtier (2) ainsi qu'une seconde partie de boîtier (4), et un composant électrique disposé dans le volume intérieur (14) du boîtier et qui comporte une carte de circuits imprimés (6), la carte de circuits imprimés (6) présentant un élément de mesure de la pression monté sur cette carte et au moins une broche de connexion (12) qui s'étend dans une direction parallèle à la surface de la carte de circuits imprimés (6), **caractérisé en ce que** ladite au moins une broche de connexion (12) se prolonge vers l'extérieur, dans la même direction d'assemblage (X) que celle dans laquelle les deux parties de boîtier (2, 4) et la carte de circuits imprimés (6) sont assemblées, en traversant un évidement (26) formé dans la seconde partie de boîtier (4), une garniture d'étanchéité (28) à travers laquelle la broche de connexion (12) se prolonge vers l'extérieur étant prévue sur la seconde partie de boîtier (4), dans l'évidement (26),
et l'une des parties de boîtier (4) présente au moins un élément de guidage (18) qui s'étend vers l'autre partie de boîtier (2) dans la direction d'assemblage (X) des parties de boîtier (2, 4) et qui s'engage dans au moins un guide correspondant (24) de l'autre partie de boîtier (2),
l'élément de guidage (18) présentant, dans la direction d'assemblage (X), une longueur telle que, lors de l'assemblage des parties de boîtier (2, 4), l'élément de guidage (18) s'engage dans le guide (24) avant que la broche de connexion (12) du composant électrique (6), lequel a été préalablement logé dans la première partie de boîtier (2), ne soit engagée dans la garniture d'étanchéité (28) prévue dans la seconde partie de boîtier (4).

2. Capteur de pression selon la revendication 1, **caractérisé en ce que**, sur une partie de boîtier (4), sont prévus deux éléments de guidage (18) qui, en partant de deux bords latéraux de la partie de boîtier (4), s'étendent dans la direction d'assemblage (X), le long de deux parois extérieures opposées de l'autre partie de boîtier (2) dans lesquelles sont formés des guides correspondants (24).

3. Capteur de pression selon l'une des revendications précédentes, **caractérisé en ce que**, sur une des parties de boîtier (4), sont prévues des languettes d'encliquetage (18) qui recouvrent au moins partiellement au moins un côté extérieur de l'autre partie de boîtier (2).

4. Capteur de pression selon l'une des revendications précédentes, **caractérisé en ce que** l'une des parties de boîtier (2) présente au moins une ouverture d'aération (26) qui est recouverte sur le côté extérieur par un segment de l'autre partie de boîtier (4), en particulier par une languette d'encliquetage (18) fixée à l'autre partie de boîtier (4), ou par un élément de guidage (18) fixé à l'autre partie de boîtier (4).

5. Capteur de pression selon les revendications 3 et 4, **caractérisé en ce que** les languettes d'encliquetage (18) s'étendent de l'une des parties de boîtier (4) à l'autre partie de boîtier (2), dans la direction d'assemblage (X), et présentent des éléments d'encliquetage (22) à l'extrémité avant, dans la direction d'assemblage (X), l'ouverture d'aération (36) étant recouverte par une région de la languette d'encliquetage (18) qui est située en arrière des éléments d'encliquetage (22) dans la direction d'assemblage.

6. Capteur de pression selon l'une des revendications 3 à 5, **caractérisé en ce que** la languette d'encliquetage (18) forme en même temps un élément de guidage selon l'une des revendications 6 à 8.

7. Capteur de pression selon l'une des revendications précédentes, **caractérisé en ce que** la garniture d'étanchéité (28) est formée sur la seconde partie de boîtier (4) d'un seul tenant avec une garniture d'étanchéité (32) destinée à obturer de manière étanche un écartement des bords entre les deux parties de boîtier (2, 4).

8. Capteur de pression selon l'une des revendications précédentes, **caractérisé en ce qu'**au moins un trou de passage (30) est formé dans la garniture d'étanchéité (28), pour recevoir la broche de connexion (12), ou que la garniture d'étanchéité (28) est traversée par la broche de connexion (12).

9. Capteur de pression selon l'une des revendications précédentes, **caractérisé en ce que** la garniture d'étanchéité (28) à travers laquelle s'étend la broche de connexion est en retrait par rapport à la surface extérieure de la seconde partie de boîtier (4) dans une proportion supérieure ou égale à celle dont la broche de connexion (12) dépasse vers l'extérieur de la garniture d'étanchéité (28).
